# EUROPEAN PATENT SPECIFICATION

(11) **EP 1 582 435 B1**
(45) Date of publication and mention of the grant of the patent: **29.12.2010**
(21) Application number: 05445019.2
(22) Date of filing: 30.03.2005
(51) Int. Cl.: B62B 9/12

(54) **Stroller for children**
Kinderwagen
Voiture d'enfant

(30) Priority: 01.04.2004 SE 0400872
(43) Date of publication of application: 05.10.2005
(73) Proprietor: European Nursery Group Sweden AB, 283 50 Osby (SE)
(72) Inventor: Johansson, Lars-Erik, 28345 Osby (SE); Svensson, Roger, 28391 Osby (SE)
(74) Representative: Karlström, Lennart

(56) References cited:
- WO-A-98/41436
- DE-A1- 10 019 731
- DE-U1- 20 210 430
- DE-U1- 20 308 018

## Description

The present invention relates to a stroller for children that can achieve not only a position for sitting but also a position for lying down.

Strollers make life easy for those persons who are to transport themselves and small children. It is customary to use a stroller, instead of a pram, for the transport of children that are older than babies. The principal difference is that children who are transported in a pram are so young that they can lie down in the pram during the complete period that the children are present in the pram. There is actually no need to be able to adjust the pram for different positions, for example, to adjust its angle of tilt. It is customary to allow children who are somewhat older, but who are still so young that they cannot walk any considerable distance on their own, and who sleep at various times during the day, to sit in a stroller rather than to lie in a pram. These children are usually active when they are awake, and they want to be involved in what is happening around them, and for this reason they will normally want to sit upright. However, they need to sleep occasionally, and for this reason these strollers are equipped with the function of being able to lower the back support of the stroller backwards such that it is possible for the child to sleep more easily and more comfortably. There are, furthermore, many other requirements that a stroller must satisfy: these requirements are described below.

It must be easy to push a stroller, thus making it possible to use the stroller on the majority of occasions. Furthermore, the stroller must only require a small area, such that it is possible to push it and to manoeuvre it easily such that it can be taken into cramped spaces, for example into shops, onto trains and onto buses. Furthermore, it must be possible to fold up the stroller such that it can be transported, for example in the luggage space of a car or on an airplane.

Children spend a relatively large amount of time in their strollers, and the strollers should for this reason be ergonomically designed for the children, which means, among other things, that the child must be able to both sit and sleep comfortably in the stroller. The stroller must at the same time be safe both for the child in the stroller and for the person pushing the stroller. The safety is increased if the stroller has logical and intuitive functional solutions, such that the adjustments of the stroller are self-instructive. It is also of the highest importance that neither the person pushing the stroller nor the child can be crushed when the back support section of the stroller is deliberately raised or lowered, or if somebody accidentally happens to interfere with a part used for the adjustment of the stroller.

In order to improve the ease of pushing the stroller and its compactness, the wheelbase (i.e. the distance between the front wheels and the rear wheels) must be as short as possible. It is easier to obtain an efficient mechanical conversion of energy from the person pushing the stroller to kinetic energy when using such strollers. A longer stroller has, by definition, a greater distance and more material between the point of action of the pushrod and the front wheels, such that a greater fraction of the energy input from the person pushing the stroller is converted into heat, through distortion of the frame, and in this way disappears from the point of view of motion.

Problems arise when a child is to be allowed to sleep in a stroller with a short wheelbase. Strollers according to the prior art achieve the sleeping position of the stroller by allowing the back support section to be lowered backwards, and thus also downwards, around a hinge that is located where the back support section meets the seat of the chair. The lowering of the back support section can be carried out in several ways.

However, this principle results in the centre of gravity of the complete stroller being displaced when the back support section, and thus also the child, is lowered backwards. The head of a child around the age of two years constitutes, as is known, a major part of the body weight. This results in the centre of gravity of the child being located close to the head, to be more precise, just underneath the neck of the youngest children. When the child is sitting upright, the centre of gravity lies just in front of a line that extends vertically upwards from the rear edge of the chair. When the back support section, and with it the child, is lowered, the centre of gravity is displaced approximately 200 mm further back from the position of the centre of gravity of the stroller when the child is sitting upright in the stroller, and the centre of gravity is then located approximately at the back wheels of the stroller.

This displacement of the centre of gravity leads to the stroller with a short wheelbase becoming unstable, and the stroller can thus tip over when the centre of gravity is displaced to the wheelbase of the stroller, or just outside of it. This problem is currently solved, with requirements for safety, by the back support section not being tipped backwards in line with the seat: the back support section is instead tipped backwards to a position at which its outermost position is equivalent to the centre of gravity being located well within the wheelbase of the stroller. Thus the child cannot lie down fully comfortably in the stroller when he or she is to sleep, but must be satisfied with a half-lying position.

DE 100 19 731 discloses a stroller according to the preamble of claim 1 in which the seat is displaced forwardly when the back support is lowered. However, in order to achieve this, a complex system of pins running in grooves and springs is needed. Such a stroller is expensive and prone to malfunction.

The present invention relates to a stroller according to claim 1. The invention will be described in more detail below, partially in association with a non-limiting embodiment of the invention shown on the attached drawings, where
- Figure 1 shows a schematic side view of a stroller,
- Figures 2a-c show a schematic side view of a stroller in different fixed adjustment positions,
- Figure 3 shows an enlarged schematic side view of the function of the stroller for raising and lowering the back support section of the stroller.

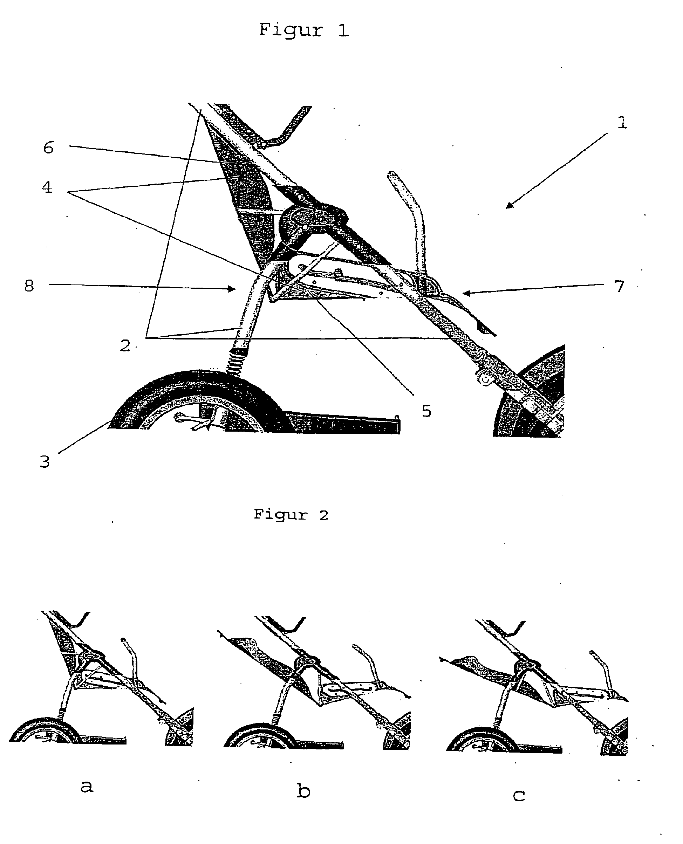

The present invention concerns a stroller 1 for children, as shown in Figure 1. The stroller comprises a chassis 2 supported by wheels 3. The said chassis 2 supports a chair 4 comprising a seat 5 and a back support section 6. The said seat 5 demonstrates a front end 7 and a rear end 8. The front end 7 is defined as the end of the seat 5 that does not make contact with the back support section 6, and as the end around which the legs of the child are bent when the child sits on the seat 5 with the legs hanging over the front end of the seat 5, with the back placed against the back support section 6. The rear end 8 of the seat 5 is defined as the end of the seat 5 that is opposite to the front end 7, and the end that is attached to rotate to the back support section 6.

The back support section 6 is arranged such that it can be raised and lowered, in order to make possible not only a sitting position but also a lying down position for the child who is sitting in the stroller 1.

According to the invention, the back support section 6 and the seat 5 are arranged in the chassis 2 such that when the back support section 6 is lowered, the seat 5 is displaced in the direction towards the front end 7 of the seat 5. The inverse is true when the back support section 6 is raised, when the seat 5 is displaced in the direction towards the rear end 8 of the seat 5. The back support section 6 can thus be lowered until it is essentially in the same plane as the seat 5, while the centre of gravity remains located within the wheelbase.

Figures 2a-c show examples of the back support section 6 of the stroller 1 at different fixed settings. Figure 2a shows the back support section 6 in a position for sitting. Figure 2b shows the back support section 6 in a partially lying position. Figure 2c shows the back support section 6 in a position for lying down.

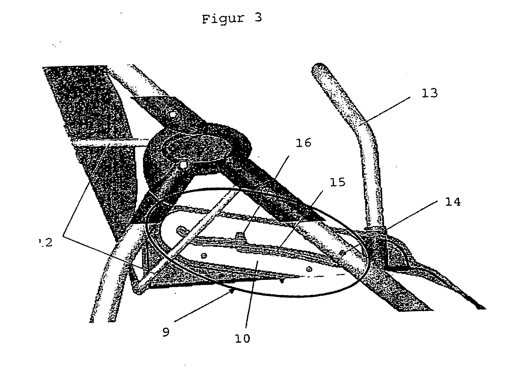

Control means 9 are arranged between the chair 4 and the chassis 2 in order to make possible the adjustment of the parts of the chair 4, see Figure 3, at the different fixed settings, see the description above for Figures 2a-c. Furthermore, the seat 5 is displaced to its different setting positions when the back support section 6 is lowered or raised.

The said control means 9 comprises a guidance slider 10 and interacting guide pegs. The guidance slider 10 is preferably located one on each side of the seat and is manufactured from a hard, durable and wear-resistant material, such as a metal. The guidance slider 10 comprises a track 15 that extends along the guidance slider 10. Engagement recesses 16 are located along the said track 15 in the guidance slider 10. The guidance slider 10 of the stroller 1 can be attached to the stroller 1 in different ways, but it is preferable that the guidance slider 10 is attached to both sides of the seat 5, i.e. the sides between the front ends and the back ends. The guide pegs, not shown in the drawing, can thus also be attached to the stroller 1 in different ways, depending on how the guidance slider 10 is attached to the stroller. The interactive function between the guidance slider 10 and the guide pegs is of major importance when the location of the guide pegs is to be determined. It is preferable that the interacting guide pegs are attached to the chassis 2, on the opposite side to 14, i.e. on the inner surface of the tubes of the chassis 2, see Figure 3.

When the guide pegs are driven to different engagement recesses 16 along the track 15, it is necessary that the chair 4 is displaced. The back support section 6 is attached by means of pivotable arms 12 to the chassis 2. Different numbers of pivotable arms 12 can attach the back support section 6 to the chassis 2 in order to retain the achievement of the desired effect of the chair 4 being displaced forwards when the back support section 6 is lowered backwards to a lying down position, and being displaced backwards to the initial position of the chair 4 when the back support section 6 is raised up to a sitting position.

There are two variants in order to be able to manoeuvre the lowering and the raising of the back support section 6 of the stroller 1 easily and smoothly. Either a handle 13 that regulates the control means is used, the handle being located on the stroller 1, preferably on the seat 5 or on the chassis 2; or at least one of the front edge of the seat 5 is quite simply lifted, and the upper edge of the back support section 6 is pressed backwards, until the desired adjustment position can be adjusted. In the latter case, the handle 13 constitutes a handle solely for the child to hold onto. When the handle 13 is used as specified in the first example described above, the handle 13 can be designed in several ways, but the function of the handle 13 in order to lower and raise the back support section 6 should be intuitive. Furthermore, it should be easy for the person pushing the stroller 1 to reach the handle 13.

According to one preferred embodiment, two guidance sliders 10 are attached, one on each side of the seat 5 facing the seat 5 just mentioned. In addition, a guide peg on each side of the chair 4 is attached to the inner surface of one of the tubes of the chassis 2. Thus, the guide pegs can be led into the track 15 and can engage in a selected engagement recess 16 of the guidance sliders 10, in order to adjust the back support section to a selected fixed adjustment position.

According to a second embodiment, two guidance sliders 10, one on each side of the seat 5, are attached to the tubes of the chassis 2. Furthermore, one guide peg on each side of the chair 4 is attached to the said sides of the chair 4. The guide pegs can in this way be led in the track 15 and engage in a selected engagement recess 16 of the guidance sliders 10 in order to adjust the back support section to a selected fixed adjustment position.

According to a further embodiment, the handle 13 is located at the front edge of the seat 5. This makes it easier for the person pushing the stroller 1 also to be able to change the adjustment position of the chair.

According to a further embodiment, the handle 13 constitutes solely a handle that the child in the stroller can hold onto. In this case, the back support section 6 is lowered by at least one of lifting the front edge of the seat 5 and pressing the upper edge of the back support section 6 backwards, and subsequently pushing the chair 4 to any one of the adjustment positions.

A number of embodiments have been described above. However, the chassis 2, chair 4, control means 9 and pivotable arms 12 of the stroller 1 may be designed in any other suitable way without deviating from the fundamental idea of the invention.

The present invention is thus not limited to the embodiments specified above. It can be varied within the framework specified by the attached claims.

## Claims

1. A stroller (1) for children, comprising a chassis (2) supported by wheels (3), and with a chair (4) supported by the chassis (2), said chair (4) comprising a seat (5) and a back support section (6), whereby the seat (5) demonstrates a front end (7) and a rear end (8), whereby the rear end (8) is attached to the back support section (6), where the back support section (6) is arranged such that it can be lowered and raised, in order to make possible both a sitting position and a lying down position, **characterised in that** the back support section (6) is connected to the chassis (2) using pivotable arms (12) and is rotatably connected to the seat (5), such that the seat (5) is displaced in a direction towards the front end (7) of the seat (5) when the back support section (6) is lowered, and inversely, that the seat (5) is displaced in a direction towards the rear end (8) of the seat (5) when the back support section (6) is raised.

2. The stroller (1) according to claim 1, **characterised in that** a control means (9) is arranged between the chair (4) and the chassis (2) in order to make it possible to adjust the parts of the chair (4) into different adjustment positions and for displacement of the seat (5) to its different adjustment positions.

3. The stroller (1) according to claim 2, **characterised in that** the control means (9) comprises a guidance slider (10) and guide pegs that interact with the guidance slider.

4. The stroller (1) according to claim 3, **characterised in that** the guidance slider (10) is attached to the seat (5) and the interacting guide pegs are attached to the chassis (2).

5. The stroller (1) according to any one of claims 2 - 4, **characterised in that** a handle (13) for regulating the control means is located on the seat (5).

## Patentansprüche

1. Kinderwagen (1) mit einem Fahrgestell (2), welches von Rädern (3) getragen wird, und mit einem Sitz (4), welcher vom Fahrgestell (2) getragen wird, wobei der Sitz (4) eine Sitzfläche (5) und einen Rückenstützabschnitt (6) aufweist, wodurch die Sitzfläche (5) ein vorderes Ende (7) und ein hinteres Ende (8) zeigt, wodurch das hintere Ende (8) an dem Rückenstützabschnitt (6) befestigt ist, wobei der Rückenstützabschnitt (6) so angeordnet ist, dass er abgesenkt und angehoben werden kann, um eine Sitzposition und eine Liegeposition zu ermöglichen, **dadurch gekennzeichnet, dass** der Rückenstützabschnitt (6) mit dem Fahrgestell (2) unter Verwendung von schwenkbaren Armen (12) verbunden ist und mit der Sitzfläche (5) drehbar verbunden ist, derart, dass die Sitzfläche (5) in eine Richtung auf das vordere Ende (7) der Sitzfläche (5) zu verschoben wird, wenn der Rückenstützabschnitt (6) abgesenkt wird und umgekehrt, dass die Sitzfläche (5) in eine Richtung zum hinteren Ende (8) der Sitzfläche (5) hin verschoben wird, wenn der Rückenstützabschnitt (6) angehoben wird.

2. Kinderwagen (1) nach Anspruch 1, **dadurch gekennzeichnet, dass** eine Steuereinrichtung (9) zwischen dem Sitz (4) und dem Fahrgestell (2) angeordnet ist, um zu ermöglichen, dass die Teile des Sitzes (4) in verschiedene Einstellungspositionen justiert werden und zur Verschiebung der Sitzfläche (5) in ihre verschiedenen Einstellungspositionen.

3. Kinderwagen (1) nach Anspruch 2, **dadurch gekennzeichnet, dass** die Steuereinrichtung (9) ein Führungsgleitstück (10) und Führungsstifte aufweist, welche mit dem Führungsgleitstück zusammenwirken.

4. Kinderwagen (1) nach Anspruch 3, **dadurch gekennzeichnet, dass** das Führungsgleitstück (10) an der Sitzfläche (5) und die zusammenwirkenden Führungsstifte an dem Fahrgestell (2) angebracht sind.

5. Kinderwagen (1) nach einem der Ansprüche 2 bis 4, **dadurch gekennzeichnet, dass** ein Handgriff (13) zum Regulieren der Steuereinrichtung an der Sitzfläche (5) angeordnet ist.

## Revendications

1. Poussette (1) ayant un châssis (2) porté par des roues (3) et un siège (4) porté par le châssis (2),
le siège (4) ayant une assise (5) et un dossier (6),
l'assise (5) ayant une extrémité avant (7) et une extrémité arrière (8), l'extrémité arrière (8) est fixée au dossier (6),
le dossier (6) est installé de façon à pouvoir être abaissé et relevé pour permettre à la fois une position assise et une position couchée, poussette **caractérisée en ce que**
le dossier (6) est relié au châssis (2) par des bras pivotants (12) et il est relié à rotation à l'assise (5) de façon que l'assise (5) soit déplacée en direction de son extrémité avant (7) lorsque le dossier (6) est abaissé et inversement, que l'assise (5) soit déplacée en direction de son extrémité arrière (8) lorsque le dossier (6) est relevé.

2. Poussette (1) selon la revendication 1,
**caractérisée par**
un moyen de commande (9) entre le siège (4) et le châssis (2) pour permettre de régler les composants du siège (4) dans différentes positions de réglage et pour déplacer l'assise (5) dans différentes positions de réglage.

3. Poussette (1) selon la revendication 2,
**caractérisée en ce que**
le moyen de commande (9) comporte un coulisseau de guidage (10) et des pattes de guidage coopérant avec le coulisseau de guidage.

4. Poussette (1) selon la revendication 3,
**caractérisée en ce que**
le coulisseau de guidage (10) est fixé à l'assise (5) et les pattes de guidage coopérant avec celui-ci sont fixées à l'assise (2).

5. Poussette (1) selon l'une quelconque des revendications 2 à 4,
**caractérisée en ce qu'**
une poignée (13) pour régler le moyen de commande se trouve sur l'assise (5).
